# EUROPEAN PATENT SPECIFICATION

(11) **EP 0 494 242 B1**
(45) Date of publication and mention of the grant of the patent: **22.06.1994**
(21) Application number: 90915207.6
(22) Date of filing: 26.09.1990
(51) Int. Cl.: B60P 7/08

(54) **AN IMPROVEMENT IN LOAD-SECUREMENT MEANS**
VERBESSERUNG AN LADEBEFESTIGUNGSVORRICHTUNGEN
AMELIORATIONS APPORTEES AUX MOYENS DE RETENUE DE CHARGEMENTS

(30) Priority: 29.09.1989 SE 8903197
(43) Date of publication of application: 15.07.1992
(73) Proprietor: AUTOKAROSS I FLOBY AB, S-52040 Floby (SE)
(72) Inventor: JOHANSSON, Per, S-521 31 Falköping (SE)
(74) Representative: Lindberg, Klas Valter Bo
(86) International application number: SE9000614
(87) International publication number: WO9104882

(56) References cited:
- SE-B- 404 677
- SE-B- 413 485

## Description

The present invention concerns a load-anchoring means comprising an anchoring loop which is arranged to be shifted from an active position in which it projects above the associated load-receiving plane and an inactive storage position in which the loop is positioned below the level of the load-receiving surface, such a load-anchoring means is known from SE-A- 7702717.

The main purpose of the invention is to provide an anchoring device of the kind mentioned above which is simple to handle and to assemble and which does not obstruct the handling of loads on the load-receiving plane.

This purpose is achieved by the means of the device in accordance with the invention which is essentially characterised in that the anchoring loop is an annular member supported along part of its circumference by a support mounted on a pivot pin located close to the load-receiving plane in such a manner as to allow said annular member to be pivoted along its middle plane between its active position and its inactive storage position.

In this manner the achoring device may be easily moved out of the way from the load-receiving plane when not in use.

Preferably, this support comprises a first piece in one side of which is formed a groove the minimum width of which surpasses the thickness of the material of the annular member at the point of mounting of the latter, and a second piece having a web-like engagement portion which has a configuration complementary to that of the groove in the first piece, the groove of the first piece and the engagement portion of the second piece being configured in such a manner that when assembled the two pieces together enclose the annular member portion that cooperates with the support.

In this manner, a device is provided which is easy to assemble while at the same time the annular member may be easily inserted into the support where it is efficiently retained in position by the assembled and interlocked support pieces.

Preferably, the portion of the annular member that cooperates with the support, i.e. with the groove in the first piece and the web portion of the second piece, is rectilinear and both support pieces are formed as rectilinear profiled members which are arranged, by mutual displacement in their longitudinal direction, to be assembled together and, when thus assembled to be interlocked by means of a transverse pin, said pin also forming the means for pivotal mounting of the support and its anchoring ring adjacent the load-receiving plane.

Owing to this arrangement a device is provided which is extremely easy to assemble and which may be maintained in assembled condition in an efficient manner. In addition thereto, it is easy to mount. Furthermore, the support pieces may easily be produced from long profiled members which are cut to suitable lengths.

Preferably, the face of the support that is turned upwards in the storage position of the support is level with the load-receiving plane so as to serve as a lid which covers the recess formed in the load-receiving plane on order to accomodate the anchoring device therein.

In this manner all means protruding above the load-receiving plane are eliminated, which would otherwise interfere with the handling of goods on the load-receiving plane.

One embodiment of the invention will be described in closer detail in the following with reference to the accompanying drawings, wherein:
Fig. 1 is a cross-sectional view through the edge profiled member of a vehicle loading platform provided with a load anchoring device in accordance with the invention;
Fig. 2 is a sectional view through the device along line II-II of Fig. 1; and

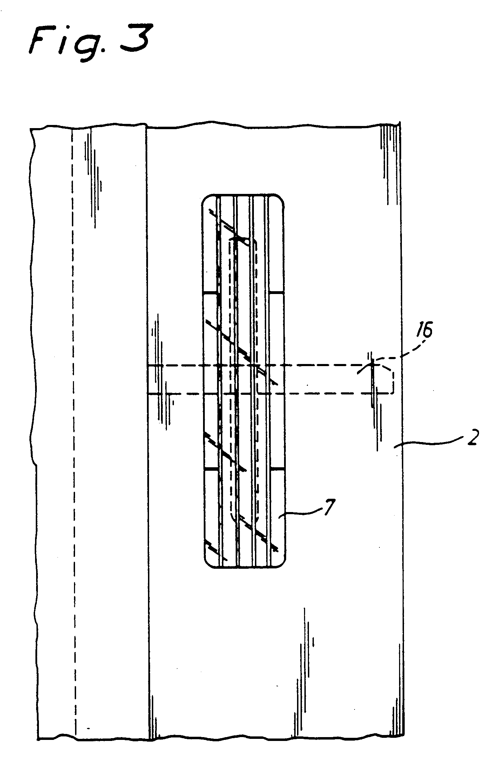

Fig. 3 is a view from above of the device illustrated in Figs. 1 and 2.

The load-anchoring device in accordance with the invention preferably is intended to be mounted in a recess or a depression formed in a load-receiving plane. In accordance with the embodiment illustrated in the drawings this recess is made in the upper flange 1 of the hollow profile edge beam, generally designated by numeral reference 2, of a vehicle loading platform. The upper flange 1 of the edge beam 2 has a depressed edge Flange portion 1' on which the slab 3 of a loading platform is supported. The load-anchoring device illustrated in the drawings consists of two main parts, i.e. an annular load-fastening loop 4 and support 5, the latter being pivotally mounted in the edge profile member 2 by means of a pivot pin 16 passing through the profile. In accordance with the embodiment illustrated the support 5 consist of two mutually interconnectable pieces 6 and 7 engaging between them a portion of the annular member 4. One 6 of the support pieces is formed with a groove 8 which in accordance with the embodiment illustrated is of irregular cross-sectional configuration whereas the second support piece 7 is formed with a web portion 9 having a shape which is complementary to that of the groove.

The groove 8 and the web portion 9 are configured in such a manner that together they form a channel 10 extending alongside the support and dimensioned to accomodate the mounting portion of the annular member 4. Furthermore, the minimum width of the groove 8 preferably surpasses the diameter d of the bar material from which the annular member 4 is made. Furthermore, the groove 8 and the web portion 9 are configured in such a manner that the two support pieces may be assembled in the lengthwise direction but on account of the complementary configuration of the groove and the web portion, the latter is prevented from being removed from its nesting position inside the groove in the transverse direction. In accordance with the embodiment illustrated the groove is undercut, i.e. its width is larger closer to its base than at its mouth. In accordance with the embodiment illustrated both support pieces are rectilinear and made from profiled members which preferably has been cut to the desired lengths. The loop 4 has a rectilinear portion 4' which bears against the support.

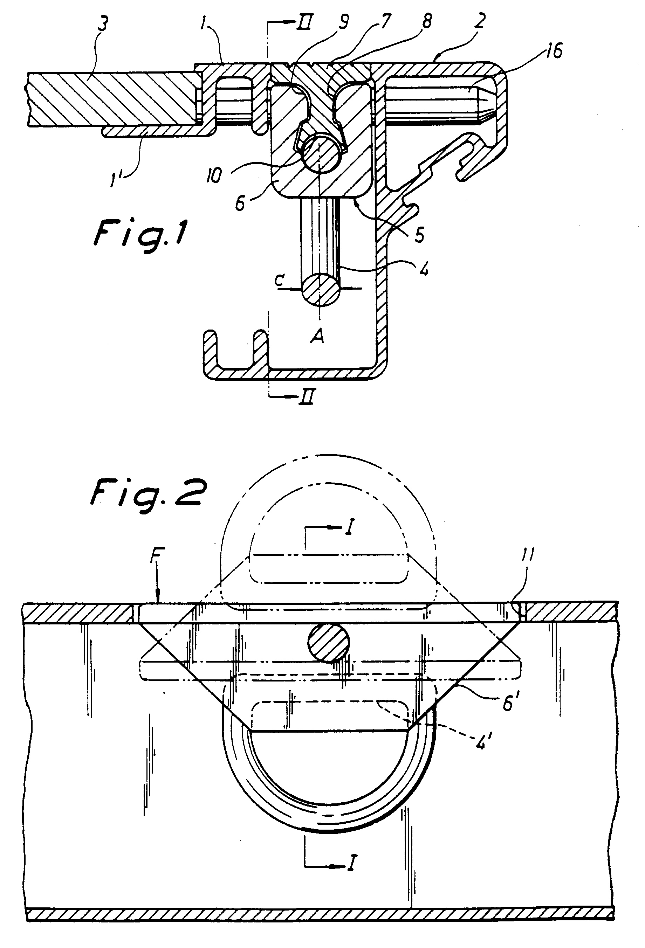

Assembly of the device is effected in the following manner. Initially, the loop is deposited in the support piece 6, and thereafter the support piece 7 is inserted into the piece 6 so as to prevent the loop from falling out of the support while at the same time allowing it to pivot therein. The two support pieces are then immobilized relatively to one another by means of a pin 16 which is pushed through apertures formed in the edge profiled member 2 in the transversal direction closely adjacent the load-receiving plane. Thus, the pin 16 will also serve as a hinge means on which the support is pivotally mounted. In this manner the annular member 4 and the two support pieces 6 and 7 are efficiently interconnected while at the same time the annular member 4 may pivot about its support and in its turn this support is pivotally interconnected with the load-receiving plane in a manner allowing it to pivot about the pin 16. The upper plane of the support piece 7 preferably is positioned level with the upper surface of the edge profiled member and its length is chosen in such a manner that in the position illustrated in Figs. 1 and 2 in continuous lines, i.e. the storage position, the recess made in the load-receiving plane, i.e. in accordance with the embodiment illustrated in the edge profiled member 2, can be covered completely. The support which has an elongated extension in the longitudinal direction of the edge profiled member, preferably has its center of gravity positioned at such a low level that the support tends to assume the position illustrated. Pivotement of the annular member 4 to the position shown in Fig. 2 by means of dash-and-dot lines, is effected by application of a force F on either one of the end portions of the support whereby the annular member is pivoted upwards. In this position, a load may be fastened to the loop which thus remains in its upright position as long as the load is secured. When the wires or straps holding the load to the loop are loosened the device resumes its storage or parking position illustrated in Fig. 1.

The invention that has been described above is one embodiment only that is not intended to limit the extent of protection of the invention. The construction may be varied as to its components and details within the scope of the appended claims without departing from the inventive idea. For instance the two pieces forming the support 5 could be made from arcuately curved parts instead of from rectilinear profiled lengths. When the curvature of these parts corresponds to the peripheral curvature of the annular member 2 the latter need not be formed with the rectilinear portion 4'. Obviously, the curvature could also have a different radius. Preferably, the attachment portion of the annular member should in this case have a corresponding curvature. The rectilinear embodiment is however preferable since it allows the annular member to pivot freely inside the support. In the embodiment illustrated the ends 6' of the support piece 6 are bevelled. This provides space for pivotal movement of the annular member and sufficient clearance in relation to the recess 11 in the edge profile member 2 but obviously other configurations of the support piece ends are possible, should this be found to be suitable. The anchoring device need not be necessarily be accommodated in a recess inside a hollow profile member, as illustrated in the drawings. It goes without saying that the device is advantageous for use in connection with any type of flat surfaces on which it is desired to secure objects. The loop need not necessarily be in the form of a completely continuous ring. It is possible to form it with an interruption or opening, either interiorly of the support part or exteriorly thereof. The latter modification may be preferred, if a hook-shaped attachment means is desired, for instance in order to receive load-fastening bodies comprising closed end loops.

## Claims

1. A load anchoring means, comprising an anchoring loop (4) which is arranged to be shifted from an active position in which it projects above the associated load-receiving plane and an inactive storage position in which the loop is positioned below the level of the load-receiving surface, said anchoring loop (4) being an annular member supported along part of its circumference by a support (5) mounted on a pivot pin (16) located close to the load-receiving plane in such a manner as to allow said annular member to be pivoted along its middle plane (A) between its active position and its inactive storage position, **characterized** in that the support (5) comprises a first piece (6) in one side of which is formed a groove (8) the minimum width of which surpasses the thickness (d) of the material of the annular member at the point of mounting of the latter, and a second piece (7) having a web-like engagement portion which has a configuration complementary to that of the groove in the first piece, the groove in the first piece and the engagement portion of the second piece being configured in such a manner that when assembled the two pieces (6, 7) together enclose the annular member portion that cooperates with the support.

2. A device as claimed in claim 1, **characterized** in that the portion (4') of the annular member (4) that cooperates with the support, i.e. with the groove (8) of the first piece and web portion (9) of the second piece, is rectilinear and that both support pieces are formed as rectilinear members which are arranged, by mutual displacement in the longitudinal direction, to be assembled and, when thus assembled, to be interlocked by means of a transverse pin (6), said pin also forming the means for pivotal mounting of the support and its anchoring ring adjacent the load-receiving plane.

3. A device as claimed in any one of the preceding claims, **characterized** in that the face of the support turned upwards in the storage position of the support is positioned level with said load receiving plane so as to serve as a lid which covers the recess (11) formed in the load receiving plane in order to to acommodate said anchoring device therein.

4. A device as claimed in any one of the claims 1 or 2, **characterized** in that the groove in one of the support pieces is undercut.

5. A device as claimed in any one of the preceding claims, **characterized** in that it is retracted into a depression formed in the hollow profiled edge beams (2) of a loading platform, the vertical walls of said edge beams having apertures formed therein to receive the pivot pin (16) on which said support is mounted.

6. A device as claimed in any one of the preceding claims, **characterized** in that the support is elongate in the transverse direction of the pivotal shaft (16) but that in combination with the loop its centre of gravity is positioned at as sufficiently low level to ensure that it tends to pivot into the storage position when the anchoring ring is not in use.

7. A device as claimed in one of the preceding claims, **characterized** in that the ends of the support part are bevelled.

## Patentansprüche

1. Lastverankerungsvorrichtung, umfassend eine Verankerungsöse (4), die von einer aktiven Position, in welcher sie über die lastaufnehmende Ebene hochragt, in eine inaktive Verwahrungsposition, in welcher sich die Öse unter dem Niveau der Lastaufnahmefläche befindet, verschiebbar ist, wobei die Verankerungsöse (4) ein ringförmiges Glied ist, das längs eines Teils seines Umfangs von einer Stütze (5) getragen ist, welche an einem Drehzapfen (16) angebracht ist, der sich nahe der lastaufnehmenden Ebene befindet, so dass das ringförmige Glied längs seiner Mittelebene (A) zwischen seiner aktiven Position und seiner inaktiven Verwahrungsposition schwenkbar ist, dadurch **gekennzeichnet**, dass die Stütze (5) einen ersten Teil (6), in dessen einer Seite eine Nut (8) geformt ist, deren Mindestbreite die Materialdicke (d) des ringförmigen Glieds an dessen Befestigungspunkt übersteigt, und einen zweiten Teil (7) mit einem rippenähnlichen Eingriffsabschnitt umfasst, der eine zu der Konfiguration der Nut im ersten Teil komplementäre Konfiguration hat, wobei die Nut im ersten Teil und der Eingriffsabschnitt des zweiten Teils derart ausgebildet sind, dass die beiden Teile (6, 7) in zusammengebrachtem Zustand zusammen den mit der Stütze zusammenwirkenden, ringförmigen Abschnitt umschliessen.

2. Vorrichtung nach Anspruch 1, dadurch **gekennzeichnet**, dass der Abschnitt (4') des ringförmigen Glieds (4), der mit der Stütze, d.h. mit der Nut (8) des ersten Teils und dem Rippenabschnitt (9) des zweiten Teils, zusammenwirkt, geradlinig ist, und dass die beiden Stützteile als geradlinige Teile ausgebildet sind, welche durch gegenseitige Verschiebung in Längsrichtung zusammenschiebbar und in zusammengebrachtem Zustand mittels eines Querstifts (6) gegenseitig verriegelbar sind, wobei der Stift auch das Mittel zum schwenkbaren Lagern der Stütze und des Verankerungsrings in der Nähe der lastaufnehmenden Ebene bildet.

3. Vorrichtung nach einem der vorhergehenden Ansprüche, dadurch **gekennzeichnet**, dass die nach oben gerichtete Fläche der Stütze in der Verwahrungsposition der Stütze mit der lastaufnehmenden Ebene ausgerichtet ist, um als Deckel zu dienen, der die in der lastaufnehmenden Ebene gebildete Aussparung (11) abdeckt, welche die Verankerungseinrichtung aufnimmt.

4. Vorrichtung nach einem der Ansprüche 1 und 2, dadurch **gekennzeichnet**, dass die Nut in einem der Stützteile unterschnitten ist.

5. Vorrichtung nach einem der vorhergehenden Ansprüche, dadurch **gekennzeichnet**, dass sie in einer in den Hohlprofilrandträgern (2) einer Ladebühne ausgebildeten Vertiefung eingezogen ist, wobei die vertikalen Wände der Randträger Öffnungen haben, um den Drehzapfen (16) aufzunehmen, an dem die Stütze angebracht ist.

6. Vorrichtung nach einem der vorhergehenden Ansprüche, dadurch **gekennzeichnet**, dass die Stütze in der Querrichtung des Drehzapfens (16) langgestreckt ist, dass sie aber in Kombination mit der Öse einen derart niedrigen Schwerpunkt hat, dass sie dazu neigt, in die Verwahrungsposition zu schwenken, wenn der Verankerungsring nicht verwendet wird.

7. Vorrichtung nach einem der vorhergehenden Ansprüche, dadurch **gekennzeichnet**, dass die Enden des Stützteils abgeschrägt sind.

## Revendications

1. Dispositif d'ancrage d'une charge, comprenant une boucle d'ancrage (4) destinée à être déplacée d'une position active dans laquelle elle dépasse au-dessus du plan associé du support de charge à une position inactive de rangement dans laquelle la boucle est placée au-dessous du niveau de la surface de support de charge, la boucle d'ancrage (4) étant un organe annulaire qui est supporté le long d'une partie de sa circonférence par un support (5) monté sur une broche de pivotement (16) placée près du plan de support de charge de manière que l'organe annulaire puisse pivoter le long de son plan médian (A) entre sa position active et sa position inactive de rangement, caractérisé en ce que le support (5) comporte une première pièce (6) d'un premier côté de laquelle est formée une gorge (8) dont la largeur minimale est supérieure à l'épaisseur (d) du matériau de l'organe annulaire au point de montage de celui-ci, et uns seconde pièce (7) ayant une partie de coopération en forme de joue qui a une configuration complémentaire de celle de la gorge de la première pièce, la gorge de la première pièce et la partie de coopération de la seconde pièce ayant une configuration telle que, après assemblage, les deux pièces (6, 7) entourent ensemble la partie d'organe annulaire qui coopère avec le support.

2. Dispositif selon la revendication 1, caractérisé en ce que la partie (4') de l'organe annulaire (4) qui coopère avec le support, c'est-à-dire avec la gorge (8) de la première pièce et la partie de joue (9) de la seconde pièce, est rectiligne, et en ce que les deux pièces de support sont formées d'organes rectilignes qui sont destinés, par déplacement mutuel dans la direction longitudinale, à être assemblés et, lorsqu'ils sont ainsi assemblés, à être solidarisés par une broche transversale (6), la broche formant aussi le dispositif de montage pivotant du support et de son anneau d'ancrage près du plan de support de la charge.

3. Dispositif selon l'une quelconque des revendications précédentes, caractérisé en ce que la face de support tournée vers le haut dans le position de rangement de support se trouve au niveau du plan de support de charge afin qu'elle soit utilisée comme couvercle qui recouvre le cavité (11) formée dans le plan de support de charge et permette le logement du dispositif d'ancrage à l'intérieur.

4. Dispositif selon l'une des revendications 1 et 2, caractérisé en ce que la gorge formée dans l'une des pièces de support a une partie découpée.

5. Dispositif selon l'une quelconque des revendications précédentes, caractérisé en ce qu'il est rentré dans une cavité formée dans les poutres profilées creuses (2) de bord d'une plate-forme de chargement, les parois verticales des poutres de bord ayant des ouvertures formées pour le logement de la broche (16) de pivotement sur laquelle est monté le support.

6. Dispositif selon l'une quelconque des revendications précédentes, caractérisé en ce que le support est allongé en direction transversale à l'arbre pivotant (16) mais, en combinaison avec la bouche, son centre de gravité se trouve à un niveau suffisamment bas pour qu'il ait tendance à pivoter en position de rangement lorsque l'anneau d'ancrage n'est pas utilisé.

7. Dispositif selon l'une quelconque des revendications précédentes, caractérisé en ce que les extrémités de la partie de support sont chanfreinées.
